Europäisches Patentamt

European Patent Office

Office européen des brevets

(11) Veröffentlichungsnummer: **0 084 370**

**A1**

(12) **EUROPÄISCHE PATENTANMELDUNG**

(21) Anmeldenummer: **83100356.1**

(22) Anmeldetag: **17.01.83**

(51) Int. Cl.³: **H 04 L 25/08**
**H 04 L 25/12**

(30) Priorität: **20.01.82 DE 3201592**

(43) Veröffentlichungstag der Anmeldung:
**27.07.83 Patentblatt 83/30**

(84) Benannte Vertragsstaaten:
**NL SE**

(71) Anmelder: **SIEMENS AKTIENGESELLSCHAFT**
**Berlin und München Wittelsbacherplatz 2**
**D-8000 München 2(DE)**

(72) Erfinder: **Schumacher, Christoph, Ing. grad.**
**Mozartstrasse 13**
**D-8034 Germering(DE)**

(54) Schaltungsanordnung zur Tastung einer Einfachstromleitung.

(57) Eine elektronische Sendeschaltung für Endgeräte der Daten- und Fernschreibtechnik, die über eine Einfachstromleitung (L) mit einer Gegenstelle, z.B. mit den Einrichtungen (TS) in einem Vermittlungsamt verbunden ist, weist eine steuerbare Stromkonstantschaltung (K) auf, deren steuerbares Schaltelement (T1), in der Regel ein Transistor, als Sendekontakt wirkt. Die Stromkonstantschaltung (K) ist während des Schaltvorgangs zeitlich begrenzt wirksam; dabei kann ihr auch eine Filtercharakteristik aufgeprägt werden.

FIG1

EP 0 084 370 A1

0084370

SIEMENS AKTIENGESELLSCHAFT
Berlin und München

Unser Zeichen
VPA

82 P 1 0 2 9 E

Schaltungsanordnung zur Tastung einer Einfachstromleitung

Die Erfindung betrifft eine Schaltungsanordnung gemäß dem Oberbegriff des Patentanspruchs 1.

Die Anwendung des sogenannten Einfachstrom-Hochpegelprinzips für die Übertragung von Fernschreibzeichen oder Daten zwischen einer Endstelle, beispielsweise einer Fernschreibteilnehmerstelle, und einer Gegenstelle, z.B. einem Vermittlungsamt ist allgemein bekannt. Eines der dabei auftretenden Probleme ist durch den Einfluß der Leitungskapazität begründet. Diese wirkt sich insofern auf die Übertragung von Zeichen zwischen Teilnehmerstellen und den Einrichtungen im Amt aus, als zur Aussendung von Zeichen bei der Teilnehmerstelle ein Sendekontakt vorgesehen ist, durch den der Leitungsstrom getastet wird. Zur Aussendung eines Startschrittes wird der Leitungsstrom unterbrochen und zur Aussendung eines Stopschrittes wird der Leitungskreis geschlossen. Dadurch wird der Leitungsstromkreis rhythmisch im Zeichen der auszusendenden Zeichenschritte unterbrochen bzw. geschlossen, d.h. getastet. Die Leitungskapazität in Verbindung mit dem Leitungswiderstand und dem Leitungsergänzungswiderstand führt zu unterschiedlichen Anstiegs- und Abfallzeiten des Leitungsstromes. Damit ergeben sich mehr oder weniger ausgeprägte Verzerrungen der übertragenen Zeichenschritte. Um diese Einflüsse zu reduzieren, ist es allgemein bekannt, durch Einschaltung einer Induktivität die Flanken der übertragenen Zeichen so weit zu symmetrieren, daß - jedenfalls im Bereich der Abtastung der Zeichenschritte - gleiche Anstiegs- und Abfallzeichen gewährleistet sind. Neben dem Einsatz einer Induktivität kann auch noch eine zusätzliche Kapazität vorgesehen sein, mit der die erforderliche Geräuschspannungsunterdrückung erreicht wird. Das ist notwendig, um die Beeinflussung von

Fk 1 Obh / 19. Jan. 1982

·0084370

Nachbaradern, die durch die Spannungsänderungen mit großen Flankensteilheiten auftreten können, auf ein vorgeschriebenes Maß zu reduzieren. Eine oder mehrere zusätzliche Kapazitäten und eventuell zusätzliche Induktivitäten bilden dabei ein Tiefpaßfilter, das den normalerweise herrschenden Bedingungen angepaßt sein muß. Derartige Tiefpaßfilter müssen Grenzfrequenzen von 100-500Hz aufweisen, was bedeutet, daß sehr große Induktivitäten gewählt werden müssen. Insgesamt führt das zu Filteranordnungen, die sowohl an Gewicht als auch an Volumen sehr groß sind. Besonders störend wirkt sich das deshalb aus, weil bei neueren Endgeräten, wie z.B. bei elektronischen Fernschreibern, im Unterschied zu früheren Geräten, der Empfangsmagnet die Aufgabe der zusätzlichen Induktivität nicht mehr übernehmen kann. Außerdem ist die Anpassung solcher Filteranordnungen an verschiedene Leitungslängen problematisch.

Aufgabe der Erfindung ist es, für die Sendeschaltung eines über eine Einfachstromleitung angeschlossenen Endgerätes, beispielsweise eines Fernschreibgerätes, eine Anordnung anzugeben, mit der einerseits die Qualität der Datenübertragung gewährleistet ist, mit der andererseits aber auch der bisher erforderliche Aufwand für Filteranordnungen vermieden wird. Zugleich soll damit auch das Übersprechen, d.h. die Beeinflussung von Nachbaradern durch die bei der Tastung auftretenden Spannungsänderungen reduziert werden.

Gelöst wird diese Aufgabe durch die im kennzeichnenden Teil des Patentanspruchs 1 angegebenen Merkmale.

Bei Verfolgung dieser Maßnahmen steht eine Anordnung zur Einfachstromtastung zur Verfügung, die den Einsatz der bisher erforderlichen passiven Filter (Tiefpaßfilter) überflüssig macht, mit der weiterhin eine optimale Kompensation der Leitungskapazität, und zwar angepaßt an die Leitungslänge erreicht wird, die nur billige elektronische Bauelemente benötigt und die schließlich auch eine gute Geräuschspannungsunterdrückung gewährleistet.

In Ausgestaltung der Erfindung wird vorgeschlagen, dem von der Stromkonstantschaltung während des Schaltens zugeführten Strom ein bestimmtes Verhalten aufzuprägen. Das kann z.B. ein zeitlich begrenztes Verhalten sein, d.h. die Stromkonstantschaltung ist nur während einer zeitlich begrenzten Dauer während des Schaltens wirksam. Damit ist der Vorteil verbunden, daß bei Zusammenarbeit der erfindungsgemäßen Abtastschaltung mit Teilnehmerschaltungen im Amt, die eine automatische Regelung aufweisen, keine undefinierten statischen Zustände auftreten können, und daß beim Zusammentreffen kritischer Toleranzen die Verlustleistung in der Stromkonstantschaltung bzw. im als Sendekontakt arbeitenden Sendetransistor der Stromkonstantschaltung nicht zu hoch wird.

Eine weitere Ausgestaltung sieht vor, daß der Stromkonstantschaltung eine Filtercharakteristik aufgeprägt wird. Damit wird der Vorteil einer verbesserten Anpassung an verschiedene spezielle Geräuschspannungsanforderungen erreicht.

Die Erfindung wird im folgenden anhand der Zeichnungen erläutert. Dabei zeigt

Fig. 1 ein Ausführungsbeispiel für eine Sendetastschaltung mit einer Stromkonstantschaltung,

Fig. 2 den Verlauf des Leitungsstromes in einer Schaltung nach Fig. 1,

Fig. 3 ein Ausführungsbeispiel, bei dem der Konstantstrom zeitlich begrenzt ist und

Fig. 4 ein Ausführungsbeispiel, bei dem dem Konstantstrom eine Filtercharakteristik aufgeprägt ist.

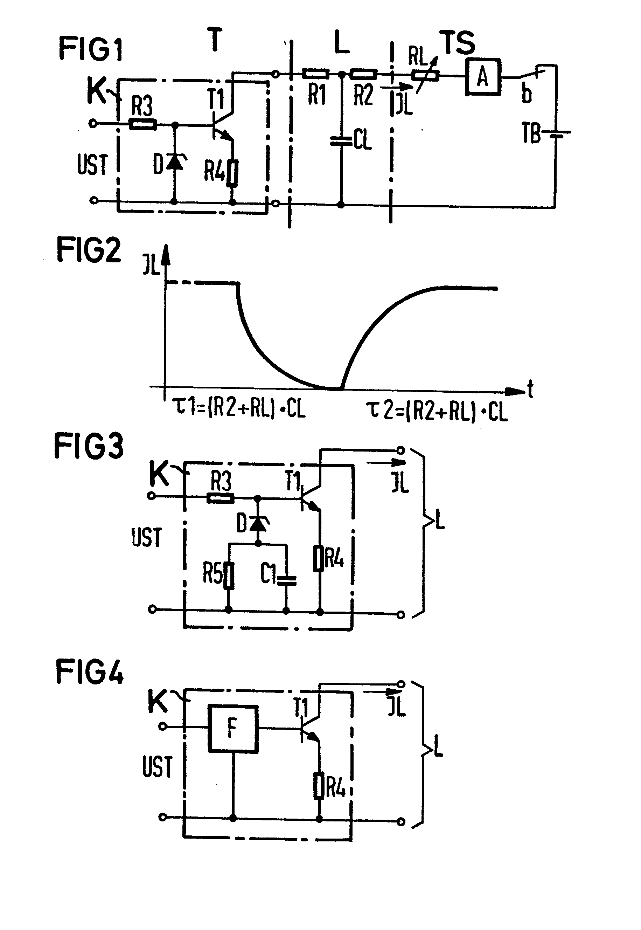

Im Ausführungsbeispiel nach Fig. 1 ist eine Teilnehmerstelle T über eine Leitung L mit einer an sich bekannten Teilnehmerschaltung TS in einem Amt dargestellt. Von der Teilnehmerschaltung TS ist hier lediglich eine Abtasteinrichtung A und die sogenannte Telegrafenbatterie TB dargestellt, die über einen während der Aussendung von Zeichen durch die Teilnehmerstelle T geschlossenen Kontakt b im Zuge der Leitung L liegt. Die Abtasteinrichtung A ist in der Regel fest auf eine Abtastschwelle eingestellt und tastet die über die Leitung L eintreffenden Schritte, d.h. den Leitungsstrom IL ab. Die Eigenschaften der Leitung L sind durch die beiden Widerstände R1 und R2, den Leitungsergänzungswiderstand RL und durch die Kapazität CL symbolisch dargestellt. Bei der Teilnehmerstelle T ist eine Stromkonstantschaltung K vorgesehen, deren Transistor T1 als Sendekontakt wirkt. Die Stromkonstantschaltung K enthält weiterhin die Widerstände R3 und R4 sowie eine Zenerdiode D. An ihrem Eingang ist die Stromkonstantschaltung K mittels der Steuerspannung UST steuerbar, d.h. sie kann ein- und ausgeschaltet werden. Die damit erreichbare Tastung des Leitungsstroms IL erfolgt hier also über einen Schalter mit Stromkonstantverhalten. Der Konstantstrom hat dabei einen Wert, der geringfügig oberhalb des für den Einsatzfall geforderten Leitungsstromes liegt. Dieser beträgt in der Regel 40mA. Die Wirkungsweise der Schaltung wird anhand von Fig. 2 deutlich, wo der Verlauf des Leitungsstromes IL an der Gegenstelle, d.h. hier im Vermittlungsamt in Abhängigkeit von der Zeit t beim Ein- und beim Ausschalten der Konstantstromschaltung dargestellt ist. Wird zum Aussenden eines Startschrittes der Transistor T1 in der Teilnehmerstelle T in den gesperrten Zustand gesteuert, so wird der auf der Leitung L fließende Strom IL unterbrochen. Der Verlauf des Leitungsstromes Il ist dabei durch die Eigenschaft der Leitung bestimmt. Die Abfallflanke ist durch die Zeitkonstante $\tau 1=(R2+RL)\cdot CL$ bestimmt. Wird zum Aussenden eines
Stopschrittes der Transistor T1 leitend gesteuert, so
steigt der Leitungsstrom IL an, wobei nunmehr auch die Anstiegsflanke durch die Zeitkonstante $\tau 2=(R2+RL)\cdot CL$ bestimmt
ist. Es sei hier angemerkt, daß bei einer bekannten Tastung mittels eines Sendekontaktes die Anstiegsflanke des
Leitungsstromes IL durch die Zeitkonstante $\tau=\frac{RL}{2}\cdot CL$ bestimmt wäre. Die für die Abfall- und für die Anstiegsflanke gleichen Zeitbedingungen werden durch die erfindungsgemäß vorgesehene Konstantstromtastung gewährleistet, da in
der der Teilnehmerstelle T zugewandten Hälfte der Leitung L
ein konstanter Strom in der Größenordnung des Linien- oder
Leitungsstromes fließt. Da eine Stromkonstantschaltung
einen sehr hohen Innenwiderstand besitzt (im Idealfall ist
der Innenwiderstand unendlich) ist der linke Ersatzwiderstand R1 der Leitung L praktisch ohne Einfluß. Damit wird
der wesentliche Vorteil erreicht, daß der Abtasteinrichtung A im Amt immer gleich lange Stop- und Startschritte
zur Verfügung stehen.

Insgesamt gesehen stellt die Anordnung eine Integrationsschaltung dar, deren Integrationskapazität die Leitungskapazität ist. Bei kurzer Leitung ist auch die Leitungskapazität klein und die Flanken des Leitungsstromes IL sind
steil. Bei langen Leitungen ist die Leitungskapazität groß
und die Flanken des Leitungsstromes IL sind flacher. Stets
sind jedoch Abfall- und Anstiegsflanken durch die gleichen
Zeitbedingungen gekennzeichnet.

Ein Ausführungsbeispiel für eine Schaltungsanordnung, mit
der die Konstantstromschaltung ein zeitlich begrenztes
Verhalten zeigt, ist in Fig. 3 dargestellt. Die in der Teilnehmerstelle T vorgesehene Konstantstromschaltung K enthält
wiederum den als Sendekontakt wirkenden Transistor T1, die
Widerstände R3 und R4 sowie die Zenerdiode D1. Zusätzlich

0084370

ist hier noch ein durch die Parallelschaltung eines Kondensators C1 und eines Widerstandes R5 gebildeter Zeitkreis vorgesehen. Damit kann der Stromkonstantschaltung K ein zeitlich begrenztes Verhalten aufgeprägt werden, d.h. die
Stromkonstantschaltung K ist nur während einer begrenzten
Zeitdauer beim Schalten des Stromes wirksam. Das ist insbesondere dann vorteilhaft, wenn in der Teilnehmerschaltung TS im Amt anstelle des Leitungsergänzungswiderstandes
eine Stromkonstantschaltung vorgesehen ist.

Ein weiteres Ausführungsbeispiel gemäß der Erfindung, bei
dem der Stromkonstantschaltung die Charakteristik eines
Filters aufgeprägt wird, zeigt Fig. 4. Auch hier handelt
es sich - ebenso wie beim Ausführungsbeispiel nach Fig. 3 -
darum, eine Impulsformung für ein sogenanntes weiches Ein-
und Ausschalten zu erreichen. Dazu ist, wie Fig. 4 zeigt,
im Basiskreis des als Sendekontakt wirkenden Transistors
T1 der Stromkonstantschaltung K ein Filter F vorgesehen,
das z.B. einen rechteckförmigen Ansteuerimpuls am Steuereingang der Stromkonstantschaltung K in eine beispielsweise trapezförmige Referenzspannung für die Ansteuerung des
Transistors T1 umwandelt. Damit läßt sich eine besonders
einfache Anpassung an vorgegebene Forderungen vor allem
hinsichtlich der Geräuschspannungsunterdrückung erreichen.
Es sei erwähnt, daß der Stromkonstantschaltung K während
des Schaltvorganges auch jede andere Filtercharakteristik
aufgeprägt werden kann.

4 Patentansprüche

4 Figuren

0084370

VPA 82 P 1 0 2 9 E

Patentansprüche

1. Schaltungsanordnung zur sendeseitigen Tastung einer zwischen einem Endgerät, z.B. einer Fernschreibteilnehmerstelle, und einer Gegenstelle, beispielsweise einer in einem Vermittlungsamt angeordneten Umsetzerschaltung verlaufenden Einfachstromleitung,
dadurch gekennzeichnet , daß das Endgerät (T) über eine steuerbare Stromkonstantschaltung (K) an die Leitung (L) angeschlossen ist, wobei ein elektronisches Schaltelement (T1) der Stromkonstantschaltung (K) als Sendekontakt zur Tastung des Leitungsstromes (IL) wirkt.

2. Schaltungsanordnung nach Anspruch 1,
dadurch gekennzeichnet , daß die regelnde Wirkung der Stromkonstantschaltung (K) zeitlich begrenzt ist.

3. Schaltungsanordnung nach Anspruch 1 oder 2,
dadurch gekennzeichnet , daß die Stromkonstantschaltung (K) eine den Stromverlauf (IL) prägende Einrichtung (F) enthält.

4. Schaltungsanordnung nach Anspruch 3,
dadurch gekennzeichnet , daß die Einrichtung (F) ein Filter ist, und daß dessen Filtercharakteristik durch Beeinflussung der Referenzspannung dem Verlauf des von der Stromkonstantschaltung (K) geregelten Stromes (IL) aufgeprägt ist.

0084370

1/1

FIG1

FIG2

$\tau 1 = (R2+RL) \cdot CL$  $\tau 2 = (R2+RL) \cdot CL$

FIG3

FIG4

Europäisches Patentamt

**EUROPÄISCHER RECHERCHENBERICHT**

0084370

| | | | EP 83100356.1 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | <u>DE - A - 2 132 616</u> (SIEMENS)<br><br>* Seite 1, Zeilen 1-13; Seite 2, Zeile 17 - Seite 3, Zeile 8; Seite 3, Zeile 23 - Seite 5, Zeile 22; Fig. 1-3 *<br><br>-- | 1 | H 04 L 25/08<br>H 04 L 25/12 |
| A | <u>DE - A1 - 3 020 354</u> (N.V. PHILIPS GLOEILAMPENFABRIEKEN)<br><br>* Seite 3, Zeile 1 - Seite 4, Zeile 24; Seite 5, Zeile 33 - Seite 9, Zeile 21; Fig. 1-2 *<br><br>---- | 1,4 | |

| RECHERCHIERTE SACHGEBIETE (Int. Cl. ³) |
|---|
| H 04 L 25/00<br>H 04 L 17/00<br>H 03 K 6/00<br>H 03 K 17/00 |

*Der vorliegende Recherchenbericht wurde für alle Patentansprüche erstellt.*

| Recherchenort | Abschlußdatum der Recherche | Prüfer |
|---|---|---|
| WIEN | 13-04-1983 | HAJOS |